# EUROPÄISCHE PATENTANMELDUNG

(11) **EP 4 520 510 A1**
(43) Veröffentlichungstag der Anmeldung: **12.03.2025**
(21) Anmeldenummer: 24209662.6
(22) Anmeldetag: 29.07.2017
(51) Int. Cl.: B29C 65/20, E06B 3/96, B29L 31/00

(54) **VERFAHREN ZUM VERSCHWEISSEN VON PROFILSTÄBEN**

(30) Priorität: 29.07.2016 DE 102016114106
(62) Teilanmeldung aus: 17183899.8
(71) Anmelder: Urban GmbH & Co. Maschinenbau KG, 87700 Memmingen (DE)
(72) Erfinder: Hiebeler, Stefan, 87463 Dietmannsried (DE)
(74) Vertreter: Patentanwälte Olbricht, Buchhold, Keulertz Partnerschaft mbB

(57) **Zusammenfassung**

Die Erfindung betrifft ein Verfahren zum Verschweißen von Profilstäben, bei welchem vorstehende Abschnitte aufgeschmolzen werden. Damit können Sichtoberflächen unverändert gelassen werden.

## Beschreibung

Die Erfindung betrifft ein Verfahren zum Verschweißen von Profilstäben.

Ein solches Verfahren kann insbesondere angewandt werden, um Fensterrahmen herzustellen. Dabei werden typischerweise eine Anzahl von beispielsweise vier Profilstäben aneinander geschweißt.

Dabei sollen die Stoßkanten zwischen den Profilstäben typischerweise auch nach dem Verschweißen ein sauberes Aussehen haben. Hierfür ist gemäß typischen Verfahren gemäß dem Stand der Technik eine Nachbearbeitung zum Entfernen von Schweißwülsten erforderlich.

Es ist deshalb eine Aufgabe der Erfindung, ein Verfahren zum Verschweißen von Profilstäben vorzusehen, welches im Vergleich zum Stand der Technik alternativ, beispielsweise besser ausgeführt ist.

Dies wird erfindungsgemäß durch ein Verfahren nach Anspruch 1 erreicht. Vorteilhafte Ausgestaltungen können beispielsweise den Unteransprüchen entnommen werden.

Die Erfindung betrifft ein Verfahren zum Verschweißen eines ersten Profilstabs und eines zweiten Profilstabs, wobei das Verfahren folgende Schritte aufweist:
- Bereitstellen des ersten Profilstabs und des zweiten Profilstabs,
   wobei sich jeder Profilstab entlang seiner jeweiligen Längsachse erstreckt,
   wobei der erste Profilstab einen ersten Innenteil und eine diesen umgebende erste Umschließung aufweist, wobei ein Teil der ersten Umschließung eine erste Sichtoberfläche bildet,
   wobei der zweite Profilstab einen zweiten Innenteil und eine diesen umgebende zweite Umschließung aufweist, wobei ein Teil der zweiten Umschließung eine zweite Sichtoberfläche bildet,
   wobei an einem ersten Längsende des ersten Profilstabs zumindest eine erste außenseitige Ausnehmung ausgebildet ist, an welcher die erste Sichtoberfläche axial bezogen auf die Längsachse des ersten Profilstabs hinter einen ersten überstehenden Abschnitt des ersten Innenteils zurückgesetzt ist, und/oder an einem zweiten Längsende des zweiten Profilstabs zumindest eine zweite außenseitige Ausnahmung ausgebildet ist, an welcher die zweite Sichtoberfläche axial bezogen auf die Längsachse des zweiten Profilstabs hinter einen zweiten überstehenden Abschnitt aus einem verschweiß- und/oder schmelzbaren Material ausgebildet ist,
- Aufschmelzen der überstehenden Abschnitte durch Erwärmen, und
- Zusammenbringen des ersten Längsendes und des zweiten Längsendes, so dass die aufgeschmolzenen überstehenden Abschnitte innenseitig eine materialschlüssige Verbindung zwischen dem ersten Profilstab und dem zweiten Profilstab ausbilden, und die erste Sichtoberfläche und die zweite Sichtoberfläche unmittelbar aneinandergrenzen, so dass sie zusammen eine gemeinsame Sichtoberfläche ausbilden.

Mittels dieses Verfahrens kann erreicht werden, dass die Sichtoberflächen durch das Verfahren nicht beeinflusst werden. Insbesondere befindet sich das geschmolzene Material nicht an der Sichtoberfläche, so dass auf eine Nachbearbeitung typischerweise verzichtet werden kann und Qualitätsverluste bei Haptik und/oder Optik vermieden werden.

Besonders bevorzugt wird das Verfahren derart durchgeführt, dass nach Ausbilden der materialschlüssigen Verbindung zwischen der ersten Sichtfläche und der zweiten Sichtfläche kein aufgeschmolzenes Material vorhanden ist. Das aufgeschmolzene Material befindet sich somit typischerweise nur innerhalb der Profilstäbe oder quillt nur an Flächen vor, welche keine Sichtoberflächen sind, und an welchen somit die Wulst nicht stört.

Besonders bevorzugt bleiben die erste Sichtoberfläche und die zweite Sichtoberfläche während des Verfahrens unverändert. Damit kann vorteilhaft eine besonders gute Optik und/oder Haptik erreicht werden. Insbesondere wird diese nicht von geschmolzenem Material beeinträchtigt.

Die Sichtoberflächen werden vorteilhaft nicht miteinander verschweißt, sondern grenzen unmittelbar aneinander, ohne dass sie eine materialschlüssige Verbindung eingehen würden.

Es hat sich bewährt, wenn die erste außenseitige Ausnehmung eine axiale Länge zwischen 1 cm und 4 cm, bevorzugt 1 cm bis 3 cm, besonders bevorzug 1 cm bis 2 cm aufweist und/oder die zweite außenseitige Ausnehmung eine axiale Länge zwischen 1 cm und 4 cm, bevorzugt 1 cm bis 3 cm, besonders bevorzug 1 cm bis 2 cm aufweist. Damit kann entsprechend Material aufgeschmolzen und zum Herstellen der materialschlüssigen Verbindung verwendet werden. Mit einer größeren Länge der axialen Ausnehmung kann grundsätzlich eine größere Festigkeit erzielt werden.

Das aufgeschmolzene Material kann sich nach dem Verfahren insbesondere in Hohlräumen der Profilstäbe befinden.

Es sei verstanden, dass in einem typischen Fall sowohl der erste Profilstab wie auch der zweite Profilstab einen jeweiligen überstehenden Abschnitt aufweisen. Es kann jedoch auch vorgesehen sein, dass nur einer der Profilstäbe einen solchen überstehenden Abschnitt aufweist.

Bevorzugt ist der erste Profilstab aus einem einheitlichen Material, insbesondere einem thermoplastischen Kunststoffmaterial, ausgebildet, und/oder der zweite Profilstab ist aus einem einheitlichen Material, insbesondere einem thermoplastischen Kunststoffmaterial, ausgebildet. Dies ergibt eine einfache Ausführung. Ein thermoplastisches Kunststoffmaterial lässt sich leicht schmelzen und damit verschweißen, bleibt bei üblichen Raumtemperaturen jedoch hart.

Gemäß einer vorteilhaften Ausführung ist der erste Profilstab als Hohlprofil ausgebildet und/oder der zweite Profilstab ist als Hohlprofil ausgebildet. Damit kann eine hohe Stabilität bei geringem Gewicht erreicht werden. Außerdem können dadurch Hohlräume zur Aufnahme des aufgeschmolzenen Materials bereitgestellt werden.

Geschickter Weise ist die erste Umschließung durch eine Mehrzahl von ersten Außenflächen gebildet, wovon eine die erste Sichtoberfläche ist, und/oder die zweite Umschließung ist durch eine Mehrzahl von zweiten Außenflächen gebildet, wovon eine die zweite Sichtoberfläche ist. Die Umschließung kann insbesondere vollständig sein. Sie kann jedoch auch Öffnungen haben.

Gemäß einer Ausführung ist der erste Innenteil aus einer Mehrzahl von zueinander winklig angeordneten ersten Innenflächen gebildet, und/oder der zweite Innenteil ist aus einer Mehrzahl von zueinander winklig angeordneten zweiten Innenflächen gebildet. Damit kann eine hohe Stabilität erreicht werden.

Gemäß einer Ausführung sind der erste Profilstab und der zweite Profilstab an dem ersten Längsende und dem zweiten Längsende auf Gehrung geschnitten, so dass der erste Profilstab und der zweite Profilstab nach dem Verschweißen einen Winkel zueinander einnehmen. Beispielsweise können sie einen rechten Winkel einnehmen. Dies kann insbesondere bei der Herstellung eines üblichen Fensterrahmens vorteilhaft sein.

Es sei verstanden, dass das Verfahren beispielsweise zur Herstellung von Fensterrähmen angewandt werden kann. Dabei werden typischerweise Winkel von 90° zwischen den Profilstäben verwendet. Es kann beispielsweise auch zur Herstellung von Kämpferfenstern verwendet werden. Dabei können beispielsweise V-förmige oder gerade Anschlagkanten zwischen den Profilstäben verwendet werden. In diesem Fall wird der V-förmige Verbindungsbereich mit einer außenseitigen Ausnehmung, insbesondere an der Sichtseite ausgestattet.

Der erste Profilstab kann insbesondere abgesehen von jeweiligen Längen spiegelsymmetrisch zum zweiten Profilstab ausgebildet sein.

Es sei verstanden, dass eine Sichtoberfläche insbesondere eine Fläche ist, welche im fertigen Produkt in einem typischen Einbauzustand zu sehen ist. Bei Fensterrahmen sind dies insbesondere diejenigen Flächen, welche einem Innenraum und einer Außenseite zugewandt sind. Auch andere Flächen können jedoch Sichtoberflächen sein.

Die erste Sichtoberfläche kann eine glatte Oberfläche aufweisen und/oder die zweite Sichtoberfläche kann eine glatte Oberfläche aufweisen. Die Sichtoberflächen können jedoch auch geeignet bearbeitet, strukturiert, gefärbt, oder sonstwie ausgeführt sein, um eine gewünschte Haptik und/oder Optik zu erreichen.

Gemäß einer Weiterbildung ist vorgesehen, dass
- ein Teil der ersten Umschließung eine weitere erste Sichtoberfläche bildet, welche der ersten Sichtoberfläche gegenüberliegt,
- ein Teil der zweiten Umschließung eine weitere zweite Sichtoberfläche bildet, welche der zweiten Sichtoberfläche gegenüberliegt,
- an dem ersten Längsende des ersten Profilstabs eine weitere erste außenseitige Ausnehmung ausgebildet ist, an welcher die weitere erste Sichtoberfläche axial bezogen auf die Längsachse des ersten Profilstabs hinter den ersten überstehenden Abschnitt des ersten Innenteils zurückgesetzt ist, und/oder an dem zweiten Längsende des zweiten Profilstabs eine weitere zweite außenseitige Ausnehmung ausgebildet ist, an welcher die weitere zweite Sichtoberfläche axial bezogen auf die Längsachse des zweiten Profilstabs hinter den zweiten überstehenden Abschnitt des zweiten Innenteils zurückgesetzt ist, und
- nach dem Ausbilden der materialschlüssigen Verbindung die weitere erste Sichtoberfläche und die weitere zweite Sichtoberfläche unmittelbar aneinandergrenzen, so dass sie zusammen eine weitere gemeinsame Sichtoberfläche ausbilden.

Damit kann eine weitere Sichtoberfläche bereitgestellt werden. Es sei verstanden, dass grundsätzlich beliebig viele Sichtoberflächen im Rahmen des Verfahrens verwendet werden können. Beispielsweise können eine, zwei, drei oder vier Sichtoberflächen verwendet werden. Es kann auch vorgesehen sein, dass die gesamte Umschließung nur Sichtoberflächen aufweist. Entsprechend ist jeder Sichtoberfläche typischerweise eine jeweilige außenseitige Ausnehmung zugeordnet.

Die Ausnehmungen können insbesondere ausgefräst sein.

Des Weiteren ist in dem Vorschlag vorteilhafter Weise vorgesehen, dass die jeweilige Ausnehmung am Längsende des ersten und/oder zweiten Profilstabes in der Materialdicke der Umschlie-ßung ausgeführt wird/ist. Hierbei ist gefunden worden, dass es bereits ausreicht, in die außenliegende Wand des Profiles, seine Umschließung, zumindest an der Sichtoberfläche eine Ausnehmung einzuarbeiten, zum Beispiel eine entsprechende Ausnehmung einzufräsen oder auf sonstige Weise einzuarbeiten. Wie weiter unten noch beschrieben wird führt diese Einarbeitung der Ausnehmung zu einer gezielten Schwächung der außenliegenden Wandung, der Umschließung des Profilstabes, was günstiger Weise zu einem Nachinnenklappen des aufgeschmolzenen Materials beim Fügen der beiden Profilstäbe führt, wodurch sich der Schweißwulst im Profilinneren ausbildet und nicht an der Sichtoberfläche, wo dieser störend ist.

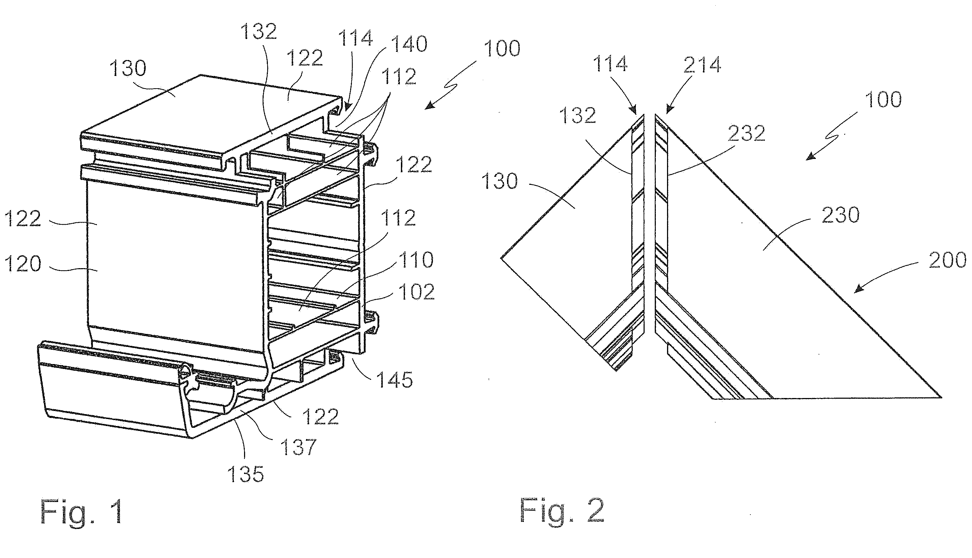

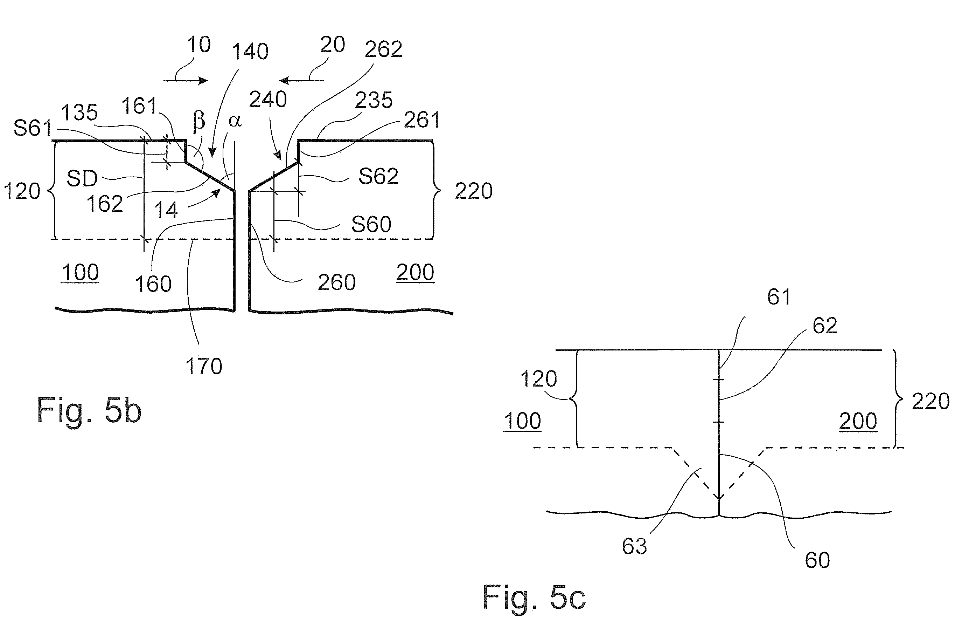

Der erfindungsgemäße Vorschlag umfasst daher mindestens 2 Varianten nämlich die 1. Variante, bei welchem der außenliegende Steg oder Umschließung komplett entfernt wird, wie dies zum Beispiel in Figur 1 gezeigt ist oder bei welchem die Umschließung im Enrbereich gezielt geschwächt wird, wie dies zum Beispiel in den Figuren 5b, 7 oder 9 gezeigt ist.

Bei einer bevorzugten Ausgestaltung des Vorschlags ist vorgesehen, dass die Ausnehmung von einer aus mindestens einer Teilfläche bestehenden Ausnehmungsendfläche gebildet ist. Diese Definition der Ausnehmung bezieht sich auf die beiden oben genannten Ausführungsvarianten des Vorschlages, also wo die Ausnehmungen die gesamte Materialstärke der außenliegenden Umschließung entfernt oder aber nur in die Materialstärke der Umschließung eingearbeitet ist.

Vorteilhafterweise ist gefunden worden, dass die erste Teilfläche der Ausnehmungsendfläche im Wesentlichen rechtwinklig zur Sichtoberfläche angeordnet ist. Diese erste, rechtwinklig angeordnete Teilfläche begrenzt dann die Sichtoberfläche und wird mit der analogen Teilfläche an dem zweiten Profilstab stumpf aneinanderstoßen, wenn der Fügeprozess abgeschlossen ist und schweißwulstlos an diesem anschließen.

Des Weiteren ist vorgesehen, dass sich an die erste Teilfläche unter einen stumpfen Winkel eine zweite Teilfläche anschließt, die, mittelbar oder unmittelbar, an die endseitige Begrenzungsfläche des überstehenden Abschnittes anschließt. Diese Ausgestaltung wird günstiger Weise dazu führen, wie weiter unten beschrieben ist, dass sich bei dem Fügeprozess der Schweißwulst innen bildet und an der Sichtoberfläche die beiden zusammen-gefügten Profilstäbe stumpf aneinanderstoßen.

In einer vorteilhaften Ausgestaltung ist vorgesehen, dass das Einarbeiten der Ausnehmung durch eine spanabhebende Bearbeitung vor dem Aufschmelzen erfolgt. Um dies zu realisieren gibt es mehrere Varianten. Zunächst ist es möglich, dass die Profilstäbe mit einer entsprechenden Ausnehmung in einer separaten Station hergerichtet werden. Die spanabhebende Bearbeitung kann zum Beispiel ein Fräs- oder Sägprozess sein. Günstige Weise ist aber eine Kombination von Fräsen mit Heizen in einen derselben Aufspannung vorgesehen, da dies zu einem schnelleren und qualitativ höherwertige Ergebnis führt.

Grundsätzlich ist es aber auch möglich, dass zunächst eine Vorerwärmung stattfindet und hernach die Ausnehmung eingearbeitet wird. Dabei kann dieser Vorerwärmungsprozess der Aufschmelzprozess sein oder der Aufschmelzprozess folgt als zweiter Erwärmungsschritt danach.

Der erfindungsgemäße Vorschlag legt sich daher nicht auf die Reihenfolge des Einarbeiten der Ausnehmung und des Erwärmen fest. Alle diesbezüglichen Varianten gehören zur Offenbarung der Erfindung.

Geschickter Weise ist vorgesehen, dass der erste und zweite Profilstab nach deren Bereitstellung je von einer, längs einer Bewegungsrichtung bewegbaren Aufspannvorrichtung aufgespannt wird und diese Aufspannung während des Verschweißens nicht verändert wird. Hierunter wird insbesondere verstanden, dass der jeweilige Profilstab fest in seiner Aufspannung gelagert ist und natürlich in seiner Aufspannvorrichtung bewegbar ist, um zum Beispiel den Fügeprozess mit dem anderen Profilstab auszuführen, der in gleicher Weise gelagert ist. Dass der Profilstab möglichst automatisiert bewegt wird, ist hinlänglich bekannt, da mehrere unterschiedliche Zustellbewegungen bei der Herstellung eines Fensterrahmenflügels usw. notwendig sind, was eine Bewegung des Profilstabes bedingt. Hierzu gehört zum Beispiel das Anstellen des Profilstabes gegen den Heizspiegel zum Aufschmelzen des Endbereiches, wie auch die nachfolgende Fügebewegung mit dem zweiten Profilstab. Pfiffig hierbei ist allerdings, dass der Profilstab als Werkstück in der Aufspannvorrichtung während des Einarbeiten der Ausnehmung, zum Beispiel bei einem Frässchritt verbleibt und so während jedem Bearbeitungsschritt (Fräsen, Heizen bzw. Heizen, Fräsen und Fügen) hochgenau positioniert ist, was die gesamte Bearbeitungskette sehr positiv beeinflusst.

Dieser Vorschlag geht einher mit einer hohen Effizienz eines solchen Verfahrens, gekoppelt mit hoher Eckfestigkeit und optimaler optischer Gestaltung des Eckbereiches, weil die Ausbildung eines unschönen Schweißwulstes an der Sichtoberfläche zuverlässig vermieden wird.

In einer weiteren bevorzugten Ausführungsform ist vorgesehen, dass nach der Bereitstellung der Profilstäbe, insbesondere vor dem Einarbeiten der Ausnehmung die Endseite des Profilstabes voraufgeschmolzen wird. Auch hierin liegt ein sehr pfiffiger Vorschlag. Das Vorschmelzen geht einher mit einer ersten Anstellbewegung des Profilstabes gegen den Heizspiegel. Dabei wird der Profilstab mit einer entsprechenden Anstellkraft gegen den Heizspiegel gedrückt und das sich erwärmende, dadurch plastifizierte Kunststoffmaterial (bevorzugt natürlich ein Thermoplast wie PVC) weicht in transversaler Richtung aus. Insbesondere wird das ausweichende Material auch nach oben bzw. zur Außenseite, zur Sichtoberfläche hin ausweichen, was eigentlich schlussendlich nicht erwünscht ist. Der Vorerwärm-Prozessschritt wird aber in geeigneter Weise ausgeführt, dann hernach der Profilstab wieder vom Heizspiegel entfernt, also zurückgezogen, wobei sich dann, in transversaler Richtung, ein Schweißüberstand (der Beginn eines Schweißwulstes, im Zusammenwirken mit dem zweiten Profil) ausgebildet hat, der hernach abgefräst oder sonstige Weise entfernt wird.

Dies muss nicht zwingend der Verfahrensschritt zur Bildung der Ausnehmung sein, dies ist aber in vorteilhafter Weise vorgesehen, der Vorschlag umfasst hier beide Varianten. Geschickterweise wird durch den mit mindestens einer, bevorzugt mehreren NC Achse gesteuerten Fräsaggregat genau der Bereich des Kunststoffmateriales weggefrässt, der hernach bevorzugt einen sichtbaren Schweißwulst ausbilden könnte.

Folgende Prozessabläufe sind denkbar:
1. Aufspannen der unbearbeiteten Profilstäbe (auf Maß und Gehrung geschnitten, aber ohne Ausnehmung ) - Voraufschmelzen - Einarbeiten der Ausnehmung (Fräsen) bei gleichzeitigen Entfernen des Schweißüberstandes - Fügen
2. Aufspannen der bearbeiteten Profilstäbe (auf Maß und Gehrung geschnitten, mit Ausnehmung ) - Voraufschmelzen - Entfernen des Schweißüberstandes - Fügen
3. Aufspannen der unbearbeiteten Profilstäbe (auf Maß und Gehrung geschnitten, aber ohne Ausnehmung ) - Voraufschmelzen - Einarbeiten der Ausnehmung (Fräsen) bei gleichzeitigen Entfernen des Schweißüberstandes - Aufschmelzen - Fügen
4. Aufspannen der bearbeiteten Profilstäbe (auf Maß und Gehrung geschnitten, mit Ausnehmung ) - Voraufschmelzen - Entfernen des Schweißüberstandes, zum Beispiel durch Abfräsen - Aufschmelzen - Fügen
5. Aufspannen der unbearbeiteten Profilstäbe (auf Maß und Gehrung geschnitten, aber ohne Ausnehmung) - Einarbeiten der Ausnehmung - Voraufschmelzen - Entfernen des Schweißüberstandes, zum Beispiel durch Abfräsen - Fügen
6. Aufspannen der unbearbeiteten Profilstäbe (auf Maß und Gehrung geschnitten, aber ohne Ausnehmung) - Einarbeiten der Ausnehmung - Voraufschmelzen - Entfernen des Schweißüberstandes, zum Beispiel durch Abfräsen - Aufschmelzen - Fügen

Vorteilhafter Weise ist vorgesehen, dass die jeweilige Sichtoberfläche der Profilstäbe zumindest teilweise von einer Schale, vorzugsweise einer Aluminiumschale verdeckt ist und das Ende der Schale mit der ersten Teilfläche fluchtet. Geschickterweise schließt dabei das Ende der Aluminiumsschale mit der Ausnehmung ab und verdeckt nach dem Fügeprozess die Eckverbindung.

Des Weiteren ist günstiger Weise vorgesehen, dass sich die Schale über Abstützelemente auf der Sichtoberfläche abstützt und eine zusätzliche Abtragung am Profilstabende im Bereich des Abstützelemente eingearbeitet wird. Die zusätzliche Abtragung wird genau dort ausgeführt, wo sich die Schale über Abstützelemente auf der Sichtoberfläche abstützt. Durch die Abtragung wird Raum geschaffen, wo sich verschmolzenes Kunststoffmaterial eventuell ausdehnen könnte und anderenfalls über das Abstützelemente die Aluminiumsschale in unschöner Weise vom Profil hochdrückt. Da aber gerade im Sichtbereich die Aluminiumsschale vorgesehen ist, kann diese zusätzliche Abtragung eingearbeitet werden, sie wird von den stumpf und spaltsfrei aneinanderstoßenden Aluminiumsschalen der beiden, die Eckverbindung bildenden, verschalten Profilstäben verdeckt.

Die in dieser Anmeldung vorgestellte Erfindung ist sehr variabel und flexibel realisierbar. Ausdrücklich wird darauf hingewiesen, dass alle verschiedene Aspekte der in dieser Anmeldung beschriebenen Offenbarung miteinander kombiniert werden können.

Insbesondere umfasst die Offenbarung auch die folgenden Kombinationen der vorgeschriebenen Verfahren:
Entfernen der Sichtoberfläche, wie in Figur 1 gezeigt, mit dem beschriebenen Prozess des Voraufschmelzens.

Schwächen der Umschließung, wie in Figur 5b, 7,8 und 9 gezeigt, mit dem beschriebenen Prozess des Voraufschmelzens.

Die Erfindung betrifft des Weiteren eine Profilstabanordnung mit einem ersten Profilstab und einem zweiten Profilstab, welche mittels eines erfindungsgemäßen Verfahrens miteinander verschweißt wurden. Dabei kann auf alle beschriebenen Ausführungen und Varianten des Verfahrens zurückgegriffen werden.

In der Zeichnung ist die Erfindung schematisch dargestellt. Es zeigen:
Fig. 1 einen Profilstab in perspektivischer Ansicht zur Verwendung in dem erfindungsgemäßen Verfahren,
Fig. 2 zwei Profilstäbe, welche auf Gehrung geschnitten sind, in einer Draufsicht, zur Verwendung in dem erfindungsgemäßen Verfahren,
Fig. 3 die Profilstäbe von Figur 2 in einer perspektivischen Ansicht,
Fig. 4 die Profilstäbe von Figur 2 in einer Seitenansicht,
Fig. 5a, 6 je in einer 3-dimensionalen Ansicht das Einarbeiten der Ausnehmung in den Profilstab nach der Erfindung,
Fig. 5b, 5c je in einer schematischen Seitenansicht die Situation des Verschweißens der beiden Profilstäbe vor dem eigentlichen Verschweißen (Figur 5b) und nach dem Verschweißen (Figur 5c) nach einem ersten Ausführungsbeispiel der Erfindung,
Fig. 7 in einer schematischen Seitenansicht die Situation des Verschweißens der beiden Profilstäbe vor dem eigentlichen Verschweißen nach einem zweiten Ausführungsbeispiel der Erfindung,
Fig. 8, 9 je in einer schematischen Seitenansicht weitere Varianten von Ausführungsbeispielen des erfindungsgemäßen Verfahrens.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Figur 1 zeigt einen Profilstab 100 in einer perspektivischen Ansicht. Der Profilstab 100 erstreckt sich entlang einer nicht eingezeichneten, aber deutlich erkennbaren Längsachse in üblicher Weise.

Der Profilstab 100 ist dazu ausgebildet, in einem Verfahren zum Verschweißen zweier Profilstäbe gemäß einem Ausführungsbeispiel der Erfindung verwendet zu werden.

Der Profilstab 100 wird in den weiteren Figuren, in welchen jeweils zwei Profilstäbe zu sehen sind, als erster Profilstab bezeichnet werden. Auch im Folgenden wird er somit als erster Profilstab 100 bezeichnet werden.

Der erste Profilstab 100 weist ein erstes Innenteil 110 sowie eine erste Umschließung 120 auf. Insgesamt ist der erste Profilstab in Form eines Hohlprofils ausgebildet.

Das erste Innenteil 110 weist eine Anzahl von ersten Innenflächen 112 auf. Diese sind winklig zueinander angeordnet, wie dies in Figur 1 gut zu erkennen ist. Im Wesentlichen sind die Innenflächen 112 jeweils entweder parallel oder quer zu einer anderen Innenfläche 112 ausgerichtet. Sie erstrecken sich entlang der Längsachse des ersten Profilstabs 100.

Die erste Umschließung 120 ist durch eine Mehrzahl von Außenflächen 122 gebildet. Diese bilden eine Außenseite des ersten Profilstabs 100 in einer Richtung quer zur Längsachse.

Eine der Außenflächen 122, nämlich diejenige, welche in Figur 1 nach oben weist, ist als erste Sichtoberfläche 130 ausgebildet. Diese erste Sichtoberfläche 130 ist in einer Art und Weise ausgebildet, dass sie eine ansehnliche Fläche bildet. Dies kann insbesondere eine Seite eines Fensterrahmens sein, welche in einer typischen Einbausituation einem Innenraum oder einem Außenbereich zugeordnet ist. Die erste Sichtoberfläche 130 ist hierzu insbesondere glatt und mit einer geeigneten Farbe ausgeführt.

Gegenüberliegend zur ersten Sichtoberfläche 130 ist eine in die entgegensetzte Richtung weisende Außenfläche 122 als weitere erste Sichtoberfläche 135 ausgebildet. Für die Eigenschaften der weiteren ersten Sichtoberfläche 135 gilt das für die erste Sichtoberfläche 130 geschriebene entsprechend.

Figur 1 zeigt den ersten Profilstab 100 benachbart zu einem ersten axialen Ende 102.

Unmittelbar angrenzend an das erste axiale Ende 102 ist oben eine erste außenseitige Ausnehmung 140 ausgebildet. Diese führt dazu dass die erste Sichtoberfläche 130 nicht ganz bis zum ersten axialen Ende 102 reicht, sondern vor diesem endet. Entsprechend ist unten eine weitere erste außenseitige Ausnehmung 145 ausgebildet. Diese führt dazu, dass die zweite Sichtoberfläche 135 nicht ganz bis zum ersten axialen Ende 102 reicht, sondern vor diesem endet.

Durch die außenseitigen Ausnehmungen 140, 145 bildet der erste Innenteil 110 einen ersten überstehenden Abschnitt 114. Dieser steht also insbesondere über erkennbare Kanten 132, 137 hervor, an welchen die erste Sichtoberfläche 130 bzw. die weitere erste Sichtoberfläche 135 enden. Dieser Abschnitt 114 hat zum Beispiel eine axiale Länge von zum Beispiel 1, 2, 3 oder 4 cm, sowie Abstufungen dazwischen. Der Abschnitt 114 endet mit der Kante 132, die eine Höhe (rechtwinklig zur Längserstreckung des Abschnittes 114) von 0,3cm, 0,5cm, 0,7cm, 1,0cm, 1,2cm, 1,5m,1,7cm oder 2,0 cm aufweisen kann. Die Erfindung umfasst auch alle Verhältnisse der axiale Länge des Abschnittes 114 zur Höhe der Kante 132 in dem angegeben Dimensionen.

Ebenso wie der Rest des ersten Profilstabs 100 ist der erste überstehende Abschnitt 114 aus einem thermoplastischen Material ausgebildet. Dies bedeutet insbesondere, dass der erste überstehende Abschnitt durch Erwärmung aufgeschmolzen werden kann. Dies kann verwendet werden, um den ersten Profilstab 100 mit einem zweiten Profilstab 200 zu verschweißen, wie dies weiter unten näher beschrieben werden wird.

Der in Figur 1 dargestellte erste Profilstab 100 ist an dem ersten axialen Ende 102 quer zu seiner Längsrichtung geschnitten. An diesen könnte somit beispielsweise ein zweiter Profilstab 200 angeschweißt werden, welcher eine Verlängerung des ersten Profilstabs 100 darstellt, sofern der zweite Profilstab 200 genauso oder ähnlich ausgebildet ist.

Der nachfolgend mit Bezug auf die Figuren 2 bis 4 beschriebene Anwendungsfall ist jedoch dergestalt, dass ein jeweiliger Profilstab am zu verschweißenden axialen Ende nicht quer, sondern auf Gehrung, also im 45°-Winkel zur Längsachse geschnitten ist. Dadurch können zwei Profilstäbe derart miteinander verschweißt werden, dass sie in einem rechten Winkel zueinander angeordnet sind. Dies wird beispielsweise bei einer typischen Herstellung eines Fensterrahmens angewandt.

Figur 2 zeigt den ersten Profilstab 100, welcher grundsätzlich wie in Figur 1 ausgebildet ist, in Abwandlung dazu jedoch ein auf Gehrung, also im Winkel von 45° zur Längsachse geschnittenes erstes axiales Ende 102 aufweist. Außerdem zeigt Figur 2 einen zweiten Profilstab 200.

Der erste Profilstab 100 ist bis auf die bereits erwähnte Änderung so ausgebildet, wie dies in Figur 1 zu sehen ist und mit Bezug auf Figur 1 beschrieben wurde. Auf eine Wiederholung wird verzichtet.

Der zweite Profilstab 200 ist spiegelsymmetrisch zum ersten Profilstab 100 ausgebildet. Unter dieser Maßgabe wird bezüglich des zweiten Profilstabs 200 auf die Beschreibung des ersten Profilstabs 100 verwiesen. Dabei ist lediglich zu beachten, dass für den zweiten Profilstab 200 im Vergleich zum ersten Profilstab 100 alle verwendeten Bezugszeichen um einen Wert von 100 erhöht werden. Außerdem werden alle bei dem ersten Profilstab 100 als "erste" Elemente bezeichnete Elemente bei dem zweiten Profilstab 200 als "zweite" Elemente bezeichnet.

Somit weist der zweite Profilstab 200 ein zweites axiales Ende 202, einen zweiten Innenteil 210 mit zweiten Innenflächen 212 und einem zweiten überstehenden Abschnitt 214, eine zweite Umschließung 220 mit zweiten Außenflächen 222, darunter eine zweite Sichtoberfläche 230 und eine weitere zweite Sichtoberfläche 235, Kanten 232, 237, eine zweite außenseitige Ausnehmung 240 und eine weitere zweite außenseitige Ausnehmung 245 auf.

Figur 2 ist eine Draufsicht, in welcher insbesondere die erste Sichtoberfläche 130 und die zweite Sichtoberfläche 230 zu sehen sind. Über deren Kanten 132, 232 stehen wie ebenfalls gut zu sehen ist der erste überstehende Abschnitt 114 und der zweite überstehende Abschnitt 214 hervor. Diese weisen aufeinander zu, wenn die Profilstäbe wie gezeigt angeordnet sind.

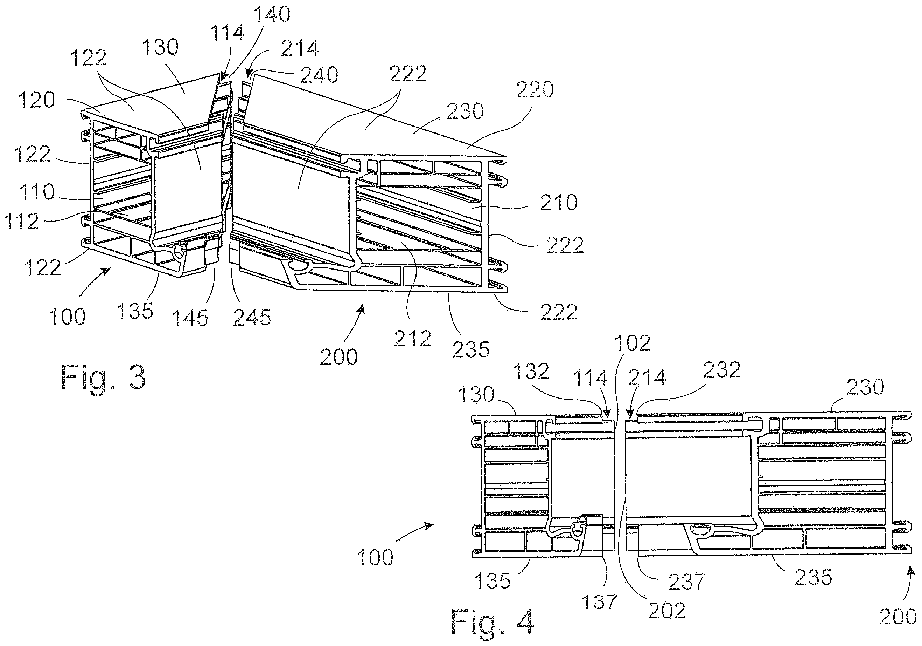

Figur 3 zeigt die Profilstäbe 100, 200 von Figur 2 in einer perspektivischen Ansicht, Figur 4 zeigt sie in einer Seitenansicht.

Es sei verstanden, dass aus Gründen der besseren Darstellung in den Figuren 2 bis 4 nicht jeweils alle Bezugszeichen dargestellt sind.

Ausgehend von dem in den Figuren 2 bis 4 dargestellten Zustand ist es nun möglich, die Profilstäbe 100, 200 gemäß einem Ausführungsbeispiel des erfindungsgemäßen Verfahrens zu verschweißen. Dies wird nachfolgend beschrieben werden.

Hierzu wird zunächst ein nicht dargestelltes flächiges Heizelement zwischen den überstehenden Abschnitten 114, 214 angeordnet. Das Heizelement wird erhitzt, so dass sich die überstehenden Abschnitte 114, 214 erwärmen. Da diese, wie bereits erwähnt, aus einem thermoplastischen Material ausgebildet sind, schmelzen sie dabei auf.

Dann werden der erste Profilstab 100 und der zweite Profilstab 200 zusammengedrückt, so dass die beiden überstehenden Abschnitte 114, 214 miteinander in Kontakt kommen. Da beide geschmolzen sind und somit fließfähig sind, vermischen sie sich dabei, so dass nach dem Abkühlen eine materialschlüssige Verbindung ausgebildet wird.

Die Profilstäbe 100, 200 werden so weit aufeinander zu bewegt, bis sich die Kanten 132, 232 der ersten und zweiten Sichtoberflächen 130, 230 sowie die Kanten 137, 237 der weiteren ersten und weiteren zweiten Sichtoberflächen 135, 235 berühren. Diese kommen jeweils miteinander in Kontakt, ohne dass die Sichtoberflächen 130, 230 während des Vorgangs verändert wurden. Der Schmelzvorgang hat sich vielmehr nur zwischen den Sichtoberflächen 130, 230 und den weiteren Sichtoberflächen 135, 235 abgespielt und geschmolzenes Material ist nur innerhalb der Profilstäbe 100, 200 vorhanden, nicht jedoch an den Sichtoberflächen 130, 135, 230, 235. Geschmolzenes Material beeinträchtigt also nicht das Erscheinungsbild an den Sichtoberflächen 130, 135, 230, 235, so dass insbesondere typischerweise auf eine Nachbearbeitung verzichtet werden kann. Trotzdem wird eine stabile mateialschlüssige Verbindung angewandt.

Es sei verstanden, dass das hier für das Verschweißen von zwei Profilstäben 100, 200 beschriebene Verfahren auch für mehr Profilstäbe angewandt werden kann. Beispielsweise kann aus vier Profilstäben ein typischer Fensterrahmen aufgebaut werden.

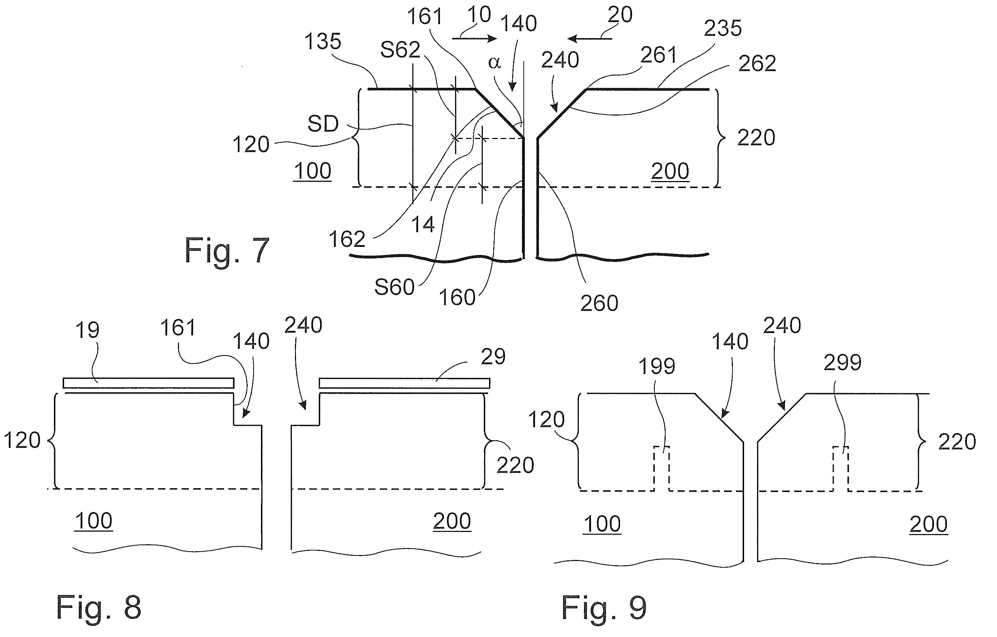

Der erfindungsgemäße Vorschlag, der insbesondere in Figur 1 beschrieben ist, wird in dem Ausführungsbeispiel nach Figur 7 weiterentwickelt. Ist in Figur 1 eine Ausnehmung 140 vorgesehen, die die gesamte Materialstärke der Umschließung 120 (welche auch die Sichtoberfläche 130 umfasst) entfernt, so wird in dem Ausführungsbeispiel nach Figur 7 die Ausnehmung 140 nur in der Materialstärke der Umschließung 120 ausgeführt. Anders formuliert ist der Maßstab von Figur 1 und Figur 7 nicht vergleichbar, Figur 7 zeigt eine deutliche Vergrößerung eines Teils des Profilstabes 100.

Im Herstellungsprozess der Verschweißverbindung sind die Endbereiche der Profilstab 100,200 so stark erwärmt, dass diese plastifiziert sind. Der hierfür notwendige Heizspiegel ist nicht mehr zu sehen, er ist bereits aus dem Bereich zwischen den beiden Profilstäben 100,200 entfernt. Die beiden Profilstäbe 100,200 werden nunmehr (siehe die entsprechenden entgegengesetzt orientierten Pfeile 10,20) zusammengeführt oder zusammengefügt, um die Verschweißung zu erreichen.

Die Stegdicke bzw. Materialdicke der Umschließung 120 und 220 ist mit dem Bezugszeichen SD gekennzeichnet. In Realität beträgt diese wenige Millimeter. Im Vergleich zu dem Ausführungsbeispiel nach Figur 1 ist hier die Ausnehmung 140, 240 auch nicht in Ansicht L-förmig, sondern als Schräge 162 ausgeführt. Die Schräge 162 schließt dabei mit der Gehrungsfläche bzw. Abschnittsfläche einen spitzen Winkel α ein. Die Schräge 162 ist dabei die erste und hier auch einzige Teilfläche der Ausnehmungsendfläche 14, die Ausnehmungsendfläche 14 begrenzt dabei die Ausnehmung 140. Aus Übersichtlichkeitsgründen ist diese Ausnehmungsendfläche 14 nur an dem Profilstab 100 gezeigt die Situation ist bei dem zweiten Profilstab 200 analog.

Es ergibt sich so eine partielle Schwächung oder Reduktion der Stegdicke SD der Umhüllung gerade im Endbereich des Profils. Diese Ausgestaltung ist bei den beiden zu verschweißenden Profilstäben 100,200 identisch.

Der Pfiff dieses Ausführungsbeispiels der Erfindung (und auch des Ausführungsbeispiels nach Figur 5b bzw 9) liegt darin, dass gefunden wurde, dass die Ausbildung eines an der Außenseite sichtbaren Schweißwulste geschickter Weise dadurch vermieden wird, wenn in geeigneter Weise die Materialstärke SD oder das Material des äußersten Steges, der Umschließung 120, gezielt geschwächt wird. Da in diesen Ausführungsbeispielen die Ausnehmung 140,240 nur in der Materialstärke SD des außen liegenden Materialsteges, der Umschließung 120,220, angeordnet ist, wird auch die Gesamtfestigkeit der Schweißverbindung, die gerade im Eckbereich benötigt wird, nur im geringen Maße reduziert. Dieser Vorschlag der Erfindung kombiniert also das Bedürfnis schweißwulstlos zu verschweißen, mit einer hohen mechanischen Festigkeit der so erzeugten (Eck-)Verbindung. Dabei ist zu betonen, dass zum Erreichen dieses Zieles kein Niederhalter oder Drücker bzw. Stempel auf den parallel zur Gehrungsfläche verlaufenden Ausnehmung 140,240 (oder Nut) notwendig ist.

Die spezielle Ausgestaltung des Endbereiches der Umschließung 120 wird durch mehrere Parameter beschrieben. Mit dem Bezugszeichen 160, 260 wird die Begrenzungsfläche bzw. Überstand oder der Bereich des Profilstabes beschrieben, der von der Tiefe (in axialer Richtung) her am meisten erwärmt, das heißt aufgeschmolzen oder "abgebrannt" (wie es in der Fachsprache bezeichnet wird) wird.

Allgemein kennzeichnet hier, wie auch in der sonstigen Beschreibung dieser Erfindung, die erste Ziffer 1 beim einem dreistelligen Bezugszeichen das jeweilige Element an den Profilstab 100, die erste Ziffer 2 beim einem dreistelligen Bezugszeichen das jeweilige Element an dem Profilstab 200.

Die Schräge 162,262 schließt mit der Begrenzungsfläche 160,260 einen spitzen Winkel α ein. Im Bereich der Kante 161,261 erfolgt idealerweise kein Verschweißen, also materialidentisches Durchdringen der beiden Profilstabmaterialien. Die Stegdicke SD beschreibt die Dicke des Materiales der Umschließung 120,220. Das Bezugszeichen S60 beschreibt die Höhe der endseitigen Begrenzungsfläche 160,260 des Steges bzw. Umschließung 120, 220. Der Quotient der Höhe S 60 zu Stegdicke SD liegt in dem Intervall von 0-80 %, bevorzugt von 10-70 %, insbesondere bevorzugt von 20-60 %.

Für diesen Parameter wird ein Intervall angegeben, das durch eine obere und untere Grenze beschrieben ist. Als Obergrenze sind zum Beispiel dabei folgende Werte vorgesehen: 90%, 80%, 70%, 60%, 50%, 40%, 30%. Als Untergrenze gelten zum Beispiel folgende Werte: 70%, 60%, 50%, 40%, 30%, 20%, 10%. Die Offenbarung dieser Anmeldung umfasst die Menge von allen Intervallen, die durch alle mögliche, technisch richtigen Kombinationen der vorgenannten Ober- und Untergrenzen besteht.

Sowohl in Figur 7, wie aber insbesondere in Figur 5b werden die Bezugszeichen 161 und 261 verwendet, wobei diese Bezugszeichen in Figur 7 nur eine Kante beschreiben, wohingegen sie in Figur 5b eine im wesentlichen rechtwinklig orientierte Fläche kennzeichnet. Es ist klar, dass die Position dieser Elemente in beiden Figuren die gleiche ist, wobei in Figur 7 die Kante 161,261 keine Höhe aufweist, aber eben den Übergang zu der Schräge 162,262 definiert und zumindest die axiale Lage des theoretischen Fügeendpunktes am Profilstab bestimmt.

In Figur 5b ist fast die gleiche Situation gezeigt wie in Figur 7. Zusätzlich zu der Ausgestaltung nach Figur 7 zeigt die Figur 5b eine (weitere) Teilfläche 161,261 der Ausnehmungsendfläche 14, welche im Wesentlichen rechtwinklig zur Sichtoberfläche 135,235 angeordnet ist. In dem hier gezeigten Ausführungsbeispiel ist die Ausnehmungsendfläche 14 von zwei Teilflächen 161, 162 gebildet. An die soeben beschriebene erste Teilfläche 161, sie ist im Wesentlichen rechtwinklig zur Sichtoberfläche 135,235 orientiert, schließt sich dann die Schräge 162 (als 2. Teilfläche) an. Dabei schließt die Schräge 162 mit der absatzartigen ersten Teilfläche 161 einen stumpfen Winkel β ein.

Der Endbereich der jeweiligen Profilstäbe 100,200 ist gemäß dem Ausführungsbeispiel nach Figur 5b, gerade im Bereich der Materialstärke der Umschließung 120,220, von mehreren Parametern gekennzeichnet. Zu einem ist dies die Höhe S61 des rechtwinkligen Absatzes 161, des weiteren die Höhe S62 der Schräge 262 und wiederum die Höhe S60 der endseitigen Begrenzungsfläche 160, 260 des Steges bzw. der Umschließung 120,200. Die Höhe bezieht sich dabei auf ein Maß rechtwinklig zur Längserstreckung des Profilstabes.

Bei einer Stegdicke SD von ca. 2,5 bis 3 oder 4 mm beträgt die Höhe S61 0,3; 0,5 oder auch 1 mm. Daher liegt das Verhältnis der Höhe S61 zur Stegdicke SD in einem Intervall von 5% bis 60%, bevorzugt 10 % bis 40 %.

Für diesen Parameter (Verhältnis der Höhe S61 zur Stegdicke SD) wird ein Intervall angegeben, das durch eine obere und untere Grenze beschrieben ist. Als Obergrenze sind zum Beispiel dabei folgende Werte vorgesehen: 60%, 50%, 40%, 30%. Als Untergrenze gelten zum Beispiel folgende Werte: 25%, 20%, 10%,5%. Die Offenbarung dieser Anmeldung umfasst die Menge von allen Intervallen, die durch alle mögliche, technisch richtigen Kombinationen der vorgenannten Ober- und Untergrenzen besteht.

Für den Winkel α ist typischerweise ein Intervall von 30-60°, bevorzugt von 40-50°, insbesondere 45° vorgesehen. Für den Winkel β ist typischerweise ein Intervall von 120-150°, bevorzugt von 125-145°, bevorzugt 135° vorgesehen. Bevorzugt beträgt der axiale Überstand der endseitigen Begrenzungsfläche 160 gegenüber dem Absatz 161 einige Millimeter bis zu wenigen Zentimetern, zum Beispiel 0,5 mm, 1 cm, 1,5 cm, 2 cm. Diesen Überstand gilt es beim Verbinden d.h. beim Verschweißen zu verschmelzen bzw. abzubrennen.

Es ist klar, je größer dieser Überstand ist, desto mehr Material steht zur Verfügung, um den nicht gewünschten Schweißwulst auszubilden. Es ist daher Ziel des Verschweißens, nur so wenig Material aufzuschmelzen d.h. zu erwärmen, dass nur ein minimaler Schweißwulst bei maximaler Festigkeit entsteht. Daher ist vorgesehen, dass der Quotient des Überstandes mit der Stegdicke SD beispielsweise in einem Intervall von 150 % bis 400 % liegt.

Für diesen Parameter (Quotient des Überstandes mit der Stegdicke SD) wird ein Intervall angegeben, das durch eine obere und untere Grenze beschrieben ist. Als Obergrenze sind zum Beispiel dabei folgende Werte vorgesehen: 600%, 500%, 400%, 300%. Als Untergrenze gelten zum Beispiel folgende Werte: 100%, 150%, 200%, 250%, 300% und 350%. Die Offenbarung dieser Anmeldung umfasst die Menge von allen Intervallen, die durch alle mögliche, technisch richtigen Kombinationen der vorgenannten Ober- und Untergrenzen besteht.

Zu beachten ist, dass sich in dem Endbereich des außenliegenden Steges des Profilstabes 100, der Umschließung 120, die nur wenige Millimeter stark ist, drei unterschiedliche Zonen ausbilden die bei dem Verschweißprozess auch vollständig unterschiedliche Funktionen ausfüllen.

Dies wird insbesondere mithilfe von Figur 5c klar. Bei Figur 5b wurde beschrieben, dass die beiden aufgeschmolzenen, also erwärmten Enden der Profilstäbe 100,200, entsprechend der einander zugewandten Pfeile 10,20 bei der Fügebewegung aufeinander zu bewegt werden und die erwärmten Bereiche der Profilenden einander berühren und sich durchdringen, also miteinander verschmelzen. In Transversalrichtung zur Bewegungsrichtung muss das sich hier durchmischende Material ausweichen und sucht sich dabei den Weg des geringsten mechanischen Widerstandes. Dieser Weg ist dem erwärmten Material vorgegeben. Die Schräge 162 ist steifer wie der zur Sichtoberfläche 135 parallel verlaufende innere Rand 170 der Umschließung 120. Hieraus resultiert, dass der erwähnte Überstand bevorzugt in das Profilinnere, hier also nach unten, ausweicht und dort den Schweißwulst 63 ausbildet, wie dies in Figur 5C gezeigt ist. In dem hier markierten Bereich 60 bildet sich also tatsächlich eine gute Verschmelzung d.h. Durchdringung der Materialien der beiden Profilstäbe 100,200 aus.

In dem darüber liegenden Bereich 62, der mit den Schrägen 162 und 262 im Bezug steht, ist die Durchdringung nicht ganz so gut, da hier eine etwas größere Oberfläche zum Volumen zur Verfügung steht und daher diese Bereich etwas schneller abkühlt, was bei dem Verschweißen zu einer etwas schlechteren Materialdurchdringung führt. Gleichzeitig ist dieses Material aber etwas steifer, was eben gerade den Effekt des nach unten Klappen des Schweißwulstes positiv unterstützt.

Der oberste Sektor 61 kommuniziert mit dem beiden Absätzen 161 und 262, die idealerweise mit dem Heizspiegel nicht in Berührung gekommen sind und nur indirekt, gering erwärmt wurden und daher auch keine Plastizität aufweisen und nach dem Fügen stumpf aneinanderstoßen. Diese sind idealerweise nicht miteinander verschweißt.

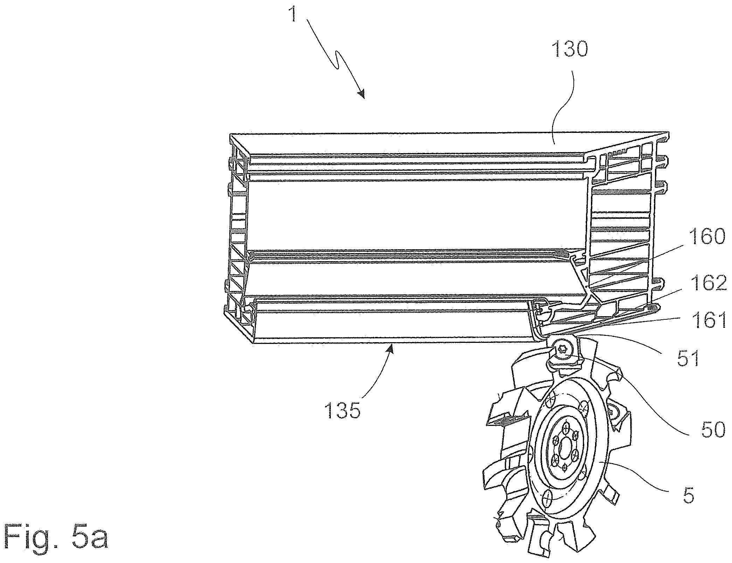

Figur 5a zeigt den Bearbeitungsschritt, wie die Ausnehmung 140 in die Materialstärke der Umschließung 120 eingearbeitet wird. Hierfür ist ein Fräßwerkzeug 5 vorgesehen. Mit 160,161 und 162 sind die jeweiligen Bereiche der endseitigen Begrenzungsfläche markiert, die den Überstand 160 (Bereich mit normalen Abbrand), die die Schräge 162 (Bereich mit reduzierten Abbrand) ausbildet und die den (rechtwinkligen) Absatz 161 (Bereich ohne Abbrand) bildet. Das Fräßwerkzeug 5 besitzt eine Mehrzahl von Messerschneiden 50, die an ihren Eckbereichen je eine Phase 51 aufweist und so die Schräge 162 in das Profilende des Profilstabes 100 einarbeitet. Es ist klar, dass das Fräßwerkzeug 5 eine spanabhebende Bearbeitung ausführt. Je nachdem, wie die Lage des Fräßwerkzeug 5 zur Sichtoberfläche 135 ist, also der Abstand der Rotationsachse des Fräßwerkzeuges zu dieser Sichtoberfläche 135, bildet sich eine größere oder kleinere Schräge 162 aus und definiert letztendlich die Ausgestaltung des Profilendes, welche danach mit dem Heizspiegel erwärmt wird und dann mit dem idealerweise in gleicher Weise vorbereiteten zweiten Profilstab 200 verschweißt also mechanisch fest verbunden wird. Der Fräser 5 wird dabei entlang der Gehrungsfläche, spitzwinklig zur Längserstreckung des Profilstabes bewegt. Der Fräser 5 ist auf einer zumindest entlang einer Raumrichtung bewegbaren und positionierbaren NC Achse angeordnet.

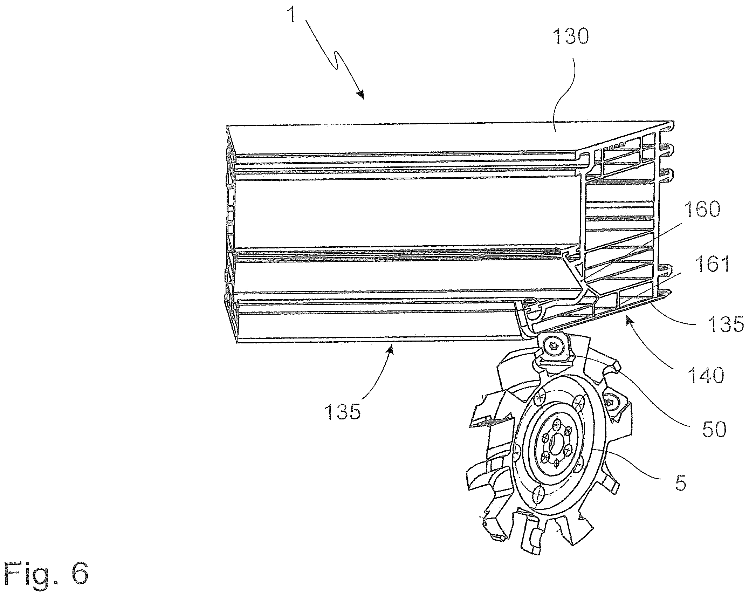

In Figur 6 ist die Lage des Fräswerkzeug 5 zur Sichtoberfläche oder 35 etwas anders der Art, dass sich nur die Überstandsfläche 160 (Fläche mit normalen Abbrand) und der Absatz 161 (Fläche ohne Abbrand) bildet.

Ein besonderer Vorzug des Vorschlages liegt in dem Ausführungsbeispiel nach Figur 8. Es ist inzwischen bekannt, auf Kunststoffprofilen Schalen aus Metall, zum Beispiel aus Aluminium anzuordnen und so die Optik eines Metallfensters mit den Vorzügen eines Kunststofffensters zu verbinden. Insbesondere der Einsatz von Aluminiumschalen 19,29 stellt für die zur Bearbeitung der Gehrungsflächen eingesetzten Fräser kein Problem dar, da diese Fräser das relativ weiche Metall Aluminium in gleicher Weise schneiden wie Kunststoff. Die Anordnung ist dabei so gewählt, dass die Abschlusskante der Aluminiumsschale 19,29 mit der rechtwinklig zur Sichtoberfläche 135 verlaufenden Absatzfläche 161 fluchtet. Die übrigen Prozessschritte sind in Figur 8 analog dem in Figur 5b bzw. 7. Es ist natürlich auch klar, dass auf einem Profilende, wie es zum Beispiel in Figur 5b oder 7 gezeigt ist in gleicher Weise auch eine Aluminiumschale aufgesetzt werden kann und die gleichen Vorzüge erreicht werden, wie bei dem hier gezeigten Ausführungsbeispiel.

Es wurde oben ausgeführt, dass die Verringerung der Stegdicke SD am Ende des Profilstabes zu den günstigen Effekt führt, dass sich der Schweißwulst von selber im Inneren des Profilstabes ausbildet und nicht nach oben quillt. Die Verringerung der Stegdicke führt zu einer endseitigen Schwächung des Profils, genau genommen des außen liegenden Steges oder Umschließung 120. Eine solche Schwächung die zu einem bevorzugten Einklappen des Schweißwulstes nach innen führt, ist in Figur 9 gezeigt. Hierzu ist in dem Endbereich der Umschließung 120, rechtwinklig zur Längserstreckung des Profilstabes 100, eine Kerbe 199 vorgesehen, die genau das gleiche leistet wie das Ausführungsbeispiel nach Figur 5b.

Ein Verfahren, das zu einem Bearbeitungsergebnis nach Figur 9 führt, wäre wie folgt strukturiert:
Das Verfahren dient zum Verschweißen eines ersten Profilstabs und eines zweiten Profilstabs, wobei das Verfahren folgende Schritte aufweist:
- Bereitstellen des ersten Profilstabs und des zweiten Profilstabs,
- wobei sich jeder Profilstab entlang seiner jeweiligen Längsachse erstreckt,
- wobei der erste Profilstab einen ersten Innenteil und eine diesen umgebende erste Umschließung aufweist, wobei ein Teil der ersten Umschließung eine erste Sichtoberfläche bildet,
- wobei der zweite Profilstab einen zweiten Innenteil und eine diesen umgebende zweite Umschließung aufweist, wobei ein Teil der zweiten Umschließung eine zweite Sichtoberfläche bildet,
- wobei an einem ersten Endbereich des ersten Profilstabs zumindest eine erste, im wesentlichen parallel zur Gehrungsfläche des Profilstabes orientierte Schwächung, wie zB eine Nut oder Kerbe angeordnet wird (zB. eingefräst)
   und/oder
   wobei an einem ersten Endbereich des zweiten Profilstabs zumindest eine zweite, im wesentlichen parallel zur Gehrungsfläche des Profilstabes orientierte Schwächung, wie zB. eine Nut oder Kerbe angeordnet wird (zB. eingefräst)
- wobei jeder Endbereich aus einem verschweiß- und/oder schmelzbaren Material ausgebildet ist,
- Aufschmelzen der Endbereich durch Erwärmen, und
- Zusammenbringen des ersten Längsendes und des zweiten Längsendes, so dass die aufgeschmolzenen Endbereich innenseitig eine materialschlüssige Verbindung zwischen dem ersten Profilstab und dem zweiten Profilstab ausbilden, und die erste Sichtoberfläche und die zweite Sichtoberfläche unmittelbar aneinandergrenzen, so dass sie zusammen eine gemeinsame Sichtoberfläche ausbilden.

Mithilfe der Figuren 2-4 wurde das weitere Fügeverfahren beschrieben. Es ist klar, dass die hier beschriebenen Schritte in analoger Weise auch bei den Ausführungsbeispielen nach Figur 5b, 7, 8 und 9 realisiert sind, dem Fachmann ist diese Vorgehensweise hier klar.

Nachfolgend werden mögliche Merkmale des Vorschlages strukturiert wiedergegeben. Die nachfolgenden strukturiert wiedergegebenen Merkmale können beliebig untereinander kombiniert werden und können in beliebiger Kombination in die Ansprüche der Anmeldung aufgenommen werden. Dem Fachmann ist klar, dass sich die Erfindung bereits aus dem Gegenstand mit den wenigsten Merkmalen ergibt. Insbesondere sind nachfolgend vorteilhafte oder mögliche Ausgestaltungen, nicht jedoch die einzig möglichen Ausgestaltungen der Erfindung wiedergegeben.

Die Erfindung umfasst:
Ein Verfahren zum Verschweißen eines ersten Profilstabs und eines zweiten Profilstabs, wobei das Verfahren folgende Schritte aufweist:
- Bereitstellen des ersten Profilstabs und des zweiten Profilstabs,
- wobei sich jeder Profilstab entlang einer jeweiligen Längsachse erstreckt,
- wobei der erste Profilstab einen ersten Innenteil und eine diesen umgebende erste Umschließung aufweist, wobei ein Teil der ersten Umschließung eine erste Sichtoberfläche bildet,
- wobei der zweite Profilstab einen zweiten Innenteil und eine diesen umgebende zweite Umschließung aufweist, wobei ein Teil der zweiten Umschließung eine zweite Sichtoberfläche bildet,
- wobei an einem ersten Längsende des ersten Profilstabs zumindest eine erste außenseitige Ausnehmung ausgebildet ist, an welcher die erste Sichtoberfläche axial bezogen auf die Längsachse des ersten Profilstabs hinter einen ersten überstehenden Abschnitt des ersten Innenteils zurückgesetzt ist, und/oder an einem zweiten Längsende des zweiten Profilstabs zumindest eine zweite außenseitige Ausnehmung ausgebildet ist, an welcher die zweite Sichtoberfläche axial bezogen auf die Längsachse des zweiten Profilstabs hinter einen zweiten überstehenden Abschnitt des zweiten Innenteils zurückgesetzt ist,
- wobei jeder überstehende Abschnitt aus einem verschweiß- und/oder schmelzbaren Material ausgebildet ist,
- Aufschmelzen der überstehenden Abschnitte durch Erwärmen, und
- Zusammenbringen des ersten Längsendes und des zweiten Längsendes, so dass die aufgeschmolzenen überstehenden Abschnitte innenseitig eine materialschlüssige Verbindung zwischen dem ersten Profilstab und dem zweiten Profilstab ausbilden, und die erste Sichtoberfläche und die zweite Sichtoberfläche unmittelbar aneinandergrenzen, so dass sie zusammen eine gemeinsame Sichtoberfläche ausbilden.

Das vorstehend genannte Verfahren, wobei nach Ausbilden der materialschlüssigen Verbindung zwischen der ersten Sichtfläche und der zweiten Sichtfläche kein aufgeschmolzenes Material vorhanden ist.

Das vorstehend genannte Verfahren, wobei die jeweilige Ausnehmung am Längsende des ersten und/oder zweiten Profilstabes in der Materialdicke der Umschließung ausgeführt wird/ist.

Das vorstehend genannte Verfahren, wobei die Ausnehmung von einer aus mindestens einer Teilfläche bestehenden Ausnehmungsendfläche gebildet ist.

Das vorstehend genannte Verfahren, wobei die erste Teilfläche der Ausnehmungsendfläche im Wesentlichen rechtwinklig zur Sichtoberfläche angeordnet ist.

Das vorstehend genannte Verfahren, wobei sich an die erste Teilfläche unter einen stumpfen Winkel eine zweite Teilfläche anschließt, die, mittelbar oder unmittelbar, an die endseitige Begrenzungsfläche des überstehenden Abschnittes anschließt.

Das vorstehend genannte Verfahren, wobei das Einarbeiten der Ausnehmung durch eine spanabhebende Bearbeitung vor dem Aufschmelzen erfolgt.

Das vorstehend genannte Verfahren, wobei der erste und zweite Profilstab nach deren Bereitstellung je von einer, längs einer Bewegungsrichtung bewegbaren Aufspannvorrichtung aufgespannt wird und diese Aufspannung während des Verschweißens nicht verändert wird.

Das vorstehend genannte Verfahren, wobei nach der Bereitstellung der Profilstäbe, insbesondere vor dem Einarbeiten der Ausnehmung die Endseite des Profilstabes voraufgeschmolzen wird.

Das vorstehend genannte Verfahren, wobei die jeweilige Sichtoberfläche der Profilstäbe zumindest teilweise von einer Schale, vorzugsweise einer Aluminiumschale verdeckt ist und das Ende der Schale mit der ersten Teilfläche fluchtet.

Das vorstehend genannte Verfahren, wobei sich die Schale über Abstützelemente auf der Sichtoberfläche abstützt und eine zusätzliche Abtragung am Profilstabende im Bereich des Abstützelemente eingearbeitet wird.

Das vorstehend genannte Verfahren, wobei die ersten Sichtoberfläche und die zweite Sichtoberfläche während des Verfahrens unverändert bleiben.

Das vorstehend genannte Verfahren, wobei die erste außenseitige Ausnehmung eine axiale Länge zwischen 1 cm und 4 cm aufweist und/oder die zweite außenseitige Ausnehmung eine axiale Länge zwischen 1 cm und 4 cm aufweist.

Das vorstehend genannte Verfahren, wobei die erste Umschließung durch eine Mehrzahl von ersten Außenflächen gebildet ist, wovon eine die erste Sichtoberfläche ist, und/oder die zweite Umschließung durch eine Mehrzahl von zweiten Außenflächen gebildet ist, wovon eine die zweite Sichtoberfläche ist.

Das vorstehend genannte Verfahren, wobei der erste Innenteil aus einer Mehrzahl von zueinander winklig angeordneten ersten Innenflächen gebildet ist, und/oder der zweite Innenteil aus einer Mehrzahl von zueinander winklig angeordneten zweiten Innenflächen gebildet ist.

Das vorstehend genannte Verfahren, wobei der erste Profilstab und der zweite Profilstab an dem ersten Längsende und dem zweiten Längsende auf Gehrung geschnitten sind, so dass der erste Profilstab und der zweite Profilstab nach dem Verschweißen einen Winkel zueinander einnehmen.

Das vorstehend genannte Verfahren, wobei der erste Profilstab abgesehen von jeweiligen Längen spiegelsymmetrisch zum zweiten Profilstab ausgebildet ist.

Das vorstehend genannte Verfahren, wobei die erste Sichtoberfläche eine glatte Oberfläche aufweist und/oder die zweite Sichtoberfläche eine glatte Oberfläche aufweist.

Das vorstehend genannte Verfahren, wobei
- ein Teil der ersten Umschließung eine weitere erste Sichtoberfläche bildet, welche der ersten Sichtoberfläche gegenüberliegt,
- ein Teil der zweiten Umschließung eine weitere zweite Sichtoberfläche bildet, welche der zweiten Sichtoberfläche gegenüberliegt,
- an dem ersten Längsende des ersten Profilstabs eine weitere erste außenseitige Ausnehmung ausgebildet ist, an welcher die weitere erste Sichtoberfläche axial bezogen auf die Längsachse des ersten Profilstabs hinter den ersten überstehenden Abschnitt des ersten Innenteils zurückgesetzt ist, und/oder an dem zweiten Längsende des zweiten Profilstabs eine weitere zweite außenseitige Ausnehmung ausgebildet ist, an welcher die weitere zweite Sichtoberfläche axial bezogen auf die Längsachse des zweiten Profilstabs hinter einen zweiten überstehenden Abschnitt des zweiten Innenteils zurückgesetzt ist, und
- nach dem Ausbilden der materialschlüssigen Verbindung die weitere erste Sichtoberfläche und die weitere zweite Sichtoberfläche unmittelbar aneinandergrenzen, so dass sie zusammen eine weitere gemeinsame Sichtoberfläche ausbilden.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen. Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Verfahren zum Verschweißen eines ersten Profilstabs und eines zweiten Profilstabs, wobei das Verfahren folgende Schritte aufweist:
- Bereitstellen des ersten Profilstabs und des zweiten Profilstabs,
- wobei sich jeder Profilstab entlang seiner jeweiligen Längsachse erstreckt,
- wobei der erste Profilstab einen ersten Innenteil und eine diesen umgebende erste Umschließung aufweist, wobei ein Teil der ersten Umschließung eine erste Sichtoberfläche bildet,
- wobei der zweite Profilstab einen zweiten Innenteil und eine diesen umgebende zweite Umschließung aufweist, wobei ein Teil der zweiten Umschließung eine zweite Sichtoberfläche bildet,
- wobei an einem ersten Längsende des ersten Profilstabs zumindest eine erste außenseitige Ausnehmung ausgebildet ist, an welcher die erste Sichtoberfläche axial bezogen auf die Längsachse des ersten Profilstabs hinter einen ersten überstehenden Abschnitt des ersten Innenteils zurückgesetzt ist, und/oder an einem zweiten Längsende des zweiten Profilstabs zumindest eine zweite außenseitige Ausnehmung ausgebildet ist, an welcher die zweite Sichtoberfläche axial bezogen auf die Längsachse des zweiten Profilstabs hinter einen zweiten überstehenden Abschnitt des zweiten Innenteils zurückgesetzt ist,
- wobei jeder überstehende Abschnitt aus einem verschweiß- und/oder schmelzbaren Material ausgebildet ist,
- Aufschmelzen der überstehenden Abschnitte durch Erwärmen, und
- Zusammenbringen des ersten Längsendes und des zweiten Längsendes, so dass die aufgeschmolzenen überstehenden Abschnitte innenseitig eine materialschlüssige Verbindung zwischen dem ersten Profilstab und dem zweiten Profilstab ausbilden, und die erste Sichtoberfläche und die zweite Sichtoberfläche unmittelbar aneinandergrenzen, so dass sie zusammen eine gemeinsame Sichtoberfläche ausbilden.

2. Verfahren nach Anspruch 1, **dadurch gekennzeichnet, dass** nach Ausbilden der formschlüssigen Verbindung zwischen der ersten Sichtfläche und der zweiten Sichtfläche kein aufgeschmolzenes Material vorhanden ist.

3. Verfahren nach einem der vorhergehenden Ansprüche, **dadurch gekennzeichnet dass** die jeweilige Ausnehmung am Längsende des ersten und/oder zweiten Profilstabes in der Materialdicke der Umschließung ausgeführt wird/ist.

4. Verfahren nach einem der vorhergehenden Ansprüche, **dadurch gekennzeichnet, dass** die Ausnehmung von einer aus mindestens einer Teilfläche bestehenden Ausnehmungsendfläche gebildet ist.

5. Verfahren nach einem der vorhergehenden Ansprüche, **dadurch gekennzeichnet, dass** die erste Teilfläche der Ausnehmungsendfläche im Wesentlichen rechtwinklig zur Sichtoberfläche angeordnet ist.

6. Verfahren nach einem der vorhergehenden Ansprüche, **dadurch gekennzeichnet, dass** sich an die erste Teilfläche unter einen stumpfen Winkel eine zweite Teilfläche anschließt, die, mittelbar oder unmittelbar, an die endseitige Begrenzungsfläche des überstehenden Abschnittes anschließt.

7. Verfahren nach einem der vorhergehenden Ansprüche, **dadurch gekennzeichnet, dass** das Einarbeiten der Ausnehmung durch eine spanabhebende Bearbeitung vor dem Aufschmelzen erfolgt.

8. Verfahren nach einem der vorhergehenden Ansprüche, **dadurch gekennzeichnet, dass** der erste und zweite Profilstab nach deren Bereitstellung je von einer, längs einer Bewegungsrichtung bewegbaren Aufspannvorrichtung aufgespannt wird und diese Aufspannung während des Verschweißens nicht verändert wird.

9. Verfahren nach einem der vorhergehenden Ansprüche, **dadurch gekennzeichnet, dass** nach der Bereitstellung der Profilstäbe, insbesondere vor dem Einarbeiten der Ausnehmung die Endseite des Profilstabes voraufgeschmolzen wird.

10. Verfahren nach einem der vorhergehenden Ansprüche, **dadurch gekennzeichnet, dass** die jeweilige Sichtoberfläche der Profilstäbe zumindest teilweise von einer Schale, vorzugsweise einer Aluminiumschale verdeckt ist und das Ende der Schale mit der ersten Teilfläche fluchtet.

11. Verfahren nach einem der vorhergehenden Ansprüche, **dadurch gekennzeichnet, dass** sich die Schale über Abstützelemente auf der Sichtoberfläche abstützt und eine zusätzliche Abtragung am Profilstabende im Bereich der Abstützelemente eingearbeitet wird.

12. Verfahren nach einem der vorhergehenden Ansprüche, **dadurch gekennzeichnet, dass** die ersten Sichtoberfläche und die zweite Sichtoberfläche während des Verfahrens unverändert bleiben.

13. Verfahren nach einem der vorhergehenden Ansprüche, **dadurch gekennzeichnet, dass** die erste außenseitige Ausnehmung eine axiale Länge zwischen 1 cm und 4 cm aufweist und/oder die zweite außenseitige Ausnehmung eine axiale Länge zwischen 1 cm und 4 cm aufweist.

14. Verfahren nach einem der vorhergehenden Ansprüche, **dadurch gekennzeichnet, dass** der erste Innenteil aus einer Mehrzahl von zueinander winklig angeordneten ersten Innenflächen gebildet ist, und/oder der zweite Innenteil aus einer Mehrzahl von zueinander winklig angeordneten zweiten Innenflächen gebildet ist.

15. Verfahren nach einem der vorhergehenden Ansprüche, **dadurch gekennzeichnet, dass**
- ein Teil der ersten Umschließung eine weitere erste Sichtoberfläche bildet, welche der ersten Sichtoberfläche gegenüberliegt,
- ein Teil der zweiten Umschließung eine weitere zweite Sichtoberfläche bildet, welche der zweiten Sichtoberfläche gegenüberliegt,
- an dem ersten Längsende des ersten Profilstabs eine weitere erste außenseitige Ausnehmung ausgebildet ist, an welcher die weitere erste Sichtoberfläche axial bezogen auf die Längsachse des ersten Profilstabs hinter den ersten überstehenden Abschnitt des ersten Innenteils zurückgesetzt ist, und/oder an dem zweiten Längsende des zweiten Profilstabs eine weitere zweite außenseitige Ausnehmung ausgebildet ist, an welcher die weitere zweite Sichtoberfläche axial bezogen auf die Längsachse des zweiten Profilstabs hinter einen zweiten überstehenden Abschnitt des zweiten Innenteils zurückgesetzt ist, und
- nach dem Ausbilden der materialschlüssigen Verbindung die weitere erste Sichtoberfläche und die weitere zweite Sichtoberfläche unmittelbar aneinandergrenzen, so dass sie zusammen eine weitere gemeinsame Sichtoberfläche ausbilden.
